# EUROPÄISCHE PATENTSCHRIFT

(11) **EP 1 353 100 B1**
(45) Veröffentlichungstag und Bekanntmachung des Hinweises auf die Patenterteilung: **14.09.2005**
(21) Anmeldenummer: 03006903.3
(22) Anmeldetag: 26.03.2003
(51) Int. Cl.: F16K 31/00, F02M 59/46, F02M 63/02, F02M 59/36

(54) **Drosselventil für Einspritzvorrichtungen**
Throttle valve for fuel injection devices
Soupape d'étranglement pour systèmes d'injection

(30) Priorität: 12.04.2002 DE 10216153
(43) Veröffentlichungstag der Anmeldung: 15.10.2003
(73) Patentinhaber: HYDRAULIK-RING GMBH, 72622 Nürtingen (DE)
(72) Erfinder: Trzmiel, Alfred, 72661 Grafenberg (DE); Neuhaus, Rolf Dr., 97816 Lohr (DE); Zapf, Friedrich, 97753 Karlstadt (DE)
(74) Vertreter: Jackisch-Kohl, Anna-Katharina

(56) Entgegenhaltungen:
- WO-A-00/28208
- WO-A-00/52322
- US-A- 4 610 427
- US-A- 4 838 233

## Beschreibung

Die Erfindung betrifft ein Drosselventil, insbesondere für Diesel-Hochdruckpumpen von Einspritzvorrichtungen in Kraftfahrzeugen, nach dem Oberbegriff des Anspruches 1.

Drosselventile haben häufig einen aufwendigen Aufbau und bauen groß.

Beim gattungsgemäßen Drosselventil (WO 00/28208 A) wird ein Ventilkörper durch einen Stößel eines Piezoantriebes gegen einen Ventilsitz eines Einsatzteiles in der Schließlage gedrückt. Das Einsatzteil ist vom freien Ende eines Hohlkolbens umgeben, der gegen die Kraft einer Druckfeder in einem Aufnahmeraum eines Gehäuses verschiebbar ist. Die Wandung des Hohlkolbens wird durch Radialbohrungen durchsetzt, über die ein axial in den Hohlkolben zugeführtes Druckmedium je nach Stellung des Hohlkolbens in Bohrungen geleitet werden kann. Bei maximalem Verschiebeweg liegt der Hohlkolben am Boden des Aufnahmeraumes an, während er am anderen Ende noch das Einsatzteil umgibt.

Bei einem anderen bekannten Ventil (WO 00/52322 A) ist ein Piezoantrieb mit Piezoelementen vorgesehen, die auf ein biegeelastisches, als Hohlkörper ausgebildetes Übertragungselement wirken. An seinem Boden ist ein Ventilkörper befestigt, der in der Schließlage an einem Ventilsitz einer Bohrung im Ventilgehäuse anliegt. Außerdem ist das Ventil mit einem Kolben versehen, der mit einer Düsennadel eines Kraftstoffinjektors gekoppelt ist. Der Kolben ist mit radialem Spiel in einer Bohrung geführt, in die stirnseitig eine Drosselbohrung mündet, die einen vor dem Kolben befindlichen Steuerraum mit einer Kraftstoffzuführung verbindet.

Es ist schließlich ein Ventil bekannt (US 4 610 427 A), bei dem die Piezoelemente eines Piezoantriebes eine Kolbenplatte betätigen, die unter Zwischenlage einer Tellerfeder an einem Einsatzteil abgestützt ist. Auf der gegenüberliegenden Seite des Einsatzteiles befindet sich ein Hohlkolben mit einer Drosselstelle in Form einer Drosselbohrung. Bei Bestromten der Piezoelemente wird die Kolbenscheibe gegen die Kraft der Tellerfeder verschoben, wodurch ein vor der Kolbenscheibe befindlicher Druckraum verkleinert wird.

Der Erfindung liegt die Aufgabe zugrunde, das gattungsgemäße Drosselventil so auszubilden, daß es bei einfachem Aufbau und kompakter Ausbildung kostengünstig hergestellt werden kann.

Diese Aufgabe wird beim gattungsgemäßen Drosselventil erfindungsgemäß mit den kennzeichnenden Merkmalen des Anspruches 1 gelöst.

Beim erfindungsgemäßen Drosselventil wird die Vorstufe durch das Druckbegrenzungsventil gebildet, das den Piezoantrieb mit mindestens einem Piezoelement aufweist. Es ist fest mit einem Stößel verbunden, der einen Ventilkörper in einer Schließlage am Ventilsitz des Einsatzteiles hält. Der Kolben hat die Drosselstelle, die dem Ventilsitz im Einsatzteil vorgelagert ist und die in einen Druckraum mündet, der zwischen dem Kolben und dem Einsatzteil vorhanden ist. Der Piezoantrieb hat einen einfachen Aufbau, besteht aus nur wenigen Bauteilen und kann darum kostengünstig gefertigt werden. Auch läßt sich der Piezoantrieb sehr einfach ansteuern.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: im Axialschnitt eine erste Ausführungsform eines erfindungsgemäßen Drosselventils,
- Fig. 2: ein Durchfluß-Strom-Diagramm des Drosselventils gemäß Figur 1,
- Fig. 3: in einer Darstellung entsprechend Fig. 1 eine zweite Ausführungsform eines erfindungsgemäßen Drosselventils,
- Fig. 4: ein Durchfluß-Strom-Diagramm des Drosselventils gemäß Fig. 3.

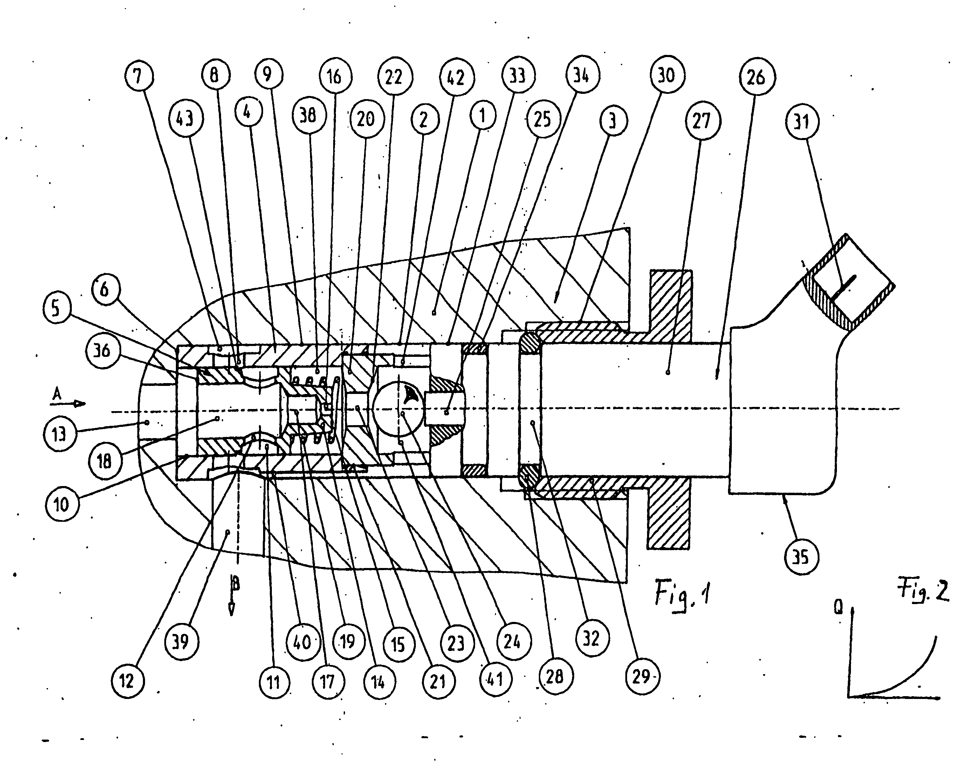

Das Drosselventil gemäß Fig. 1 wird vorzugsweise für Diesel-Hochdruckpumpen bei Einspritzvorrichtungen in Kraftfahrzeugen eingesetzt. Die Hochdruckpumpe hat ein Gehäuse 1, das einen Einbauraum 2 für ein Drosselventil 3 aufweist. In den Einbauraum 2 ist eine Buchse 4 eingesetzt, die einen Kolben 5 aufnimmt. Die Buchse 4 sitzt auf einem Boden 6 des Einbauraumes 2 auf und weist am Umfang eine Ringnut 7 auf, in die die Buchse 4 durchsetzende Radialbohrungen 8 münden. Die Buchse 4 sitzt abgedichtet im Einbauraum 2 und liegt an dessen Innenwandung 9 an.

Der Kolben 5 liegt abgedichtet an der Innenwand 10 der Buchse 4 an und hat an seiner Außenseite eine Ringnut 11, in die über den Umfang verteilt den Kolben 5 durchsetzende Radialbohrungen 12 münden.

Der Kolben 5 ist als Hohlkolben ausgebildet, der in Richtung auf den Boden 6 des Einbauraumes 2 offen ist. In den Boden 6 mündet zentrisch eine Hydraulikmedium führende Bohrung 13, die im Pumpengehäuse 1 vorgesehen ist. Das in der Bohrung 13 befindliche Medium kann in den Hohlkolben 5 gelangen. Er ist an seiner vom Böden 6 des Einbauraumes 2 abgewandten Stirnseite mit einem zentrischen axialen Ansatz 14 versehen, der hohlkegelstumpfförmig ausgebildet ist und dessen Stirnseite 15 von einer axialen Bohrung 16 durchsetzt ist, die wesentlich kleineren Querschnitt hat als der Innenraum 17 des Ansatzes 14 sowie der Hohlraum 18 des Kolbens 5. Der Querschnitt des Innenraumes 17 des Ansatzes 14 wiederum ist kleiner als der Querschnitt des Hohlraumes 18.

Der Hohlkolben 5 wird durch wenigstens eine Druckfeder 19 in Richtung auf den Boden 6 des Einbauraumes 2 belastet. Sie umgibt den Ansatz 14 und stützt sich mit einem Ende am Hohlkolben 5 und mit ihrem anderen Ende an einem Einsatzteil 20 ab. Es liegt auf einer radialen Schulterfläche 21 auf, die in der Innenwand 10 der Buchse 4 vorgesehen ist. Das Einsatzteil 20 hat einen Ventilsitz 22, in den zentrisch eine Bohrung 23 mündet, die durch einen Ventilkörper 24 verschlossen werden kann, der im Ausführungsbeispiel eine Ventilkugel ist. Die Bohrung 23 hat größeren Durchmesser als die Bohrung 16 im Kolbenansatz 17, die eine Drosselstelle bildet. Der Ventilkörper 24 wird durch einen Stößel 25 in seiner Dichtstellung gehalten, der durch einen Piezoantrieb 26 betätigt wird. Der Stößel 25 ist fest mit den (nicht dargestellten) Piezoelementen des Piezoantriebes 26 verbunden. Er ist in bekannter Weise ausgebildet und hat ein Gehäuse 27, das durch wenigstens einen Dichtring 28 abgedichtet in einer Mutter 29 sitzt, die in einen erweiterten Abschnitt 30 des Einbauraumes 2 geschraubt wird. Der Piezoantrieb 26 ist an seinem axial über die Mutter 29 ragenden Teil mit einem Strom/Spannungsanschluß 31 versehen. Das Gehäuse 27 des Piezoantriebes 26 hat eine Ringnut 32 zur Aufnahme des Dichtringes 28 und ragt mit seinem freien Ende in den im Durchmesser verringerten Abschnitt 33 des Einbauraumes 2. In diesem Abschnitt 33 sitzt auch die Buchse 4, die den Hohlkolben 5 aufnimmt. Gegenüber der Innenwand 9 dieses Einbauraumabschnittes 33 ist das Gehäuse 27 durch einen weiteren Dichtring 34 abgedichtet, der auf dem freien Ende des Gehäuses 27 sitzt.

Durch Bestromen des Piezoantriebes 26 wird der Stößel 25 gegen den Ventilsitz 22 gedrückt, so daß die Bohrung 23 geschlossen wird. Die Kraft, mit welcher der Stößel 25 den Ventilkörper 24 in seine Schließstellung drückt, kann über die Strom/Spannungshöhe variabel eingestellt werden. Der Piezoantrieb 26 mit dem Stößel 25, dem Ventilkörper 24 und dem Einsatzteil 20 bildet ein Druckbegrenzungsventil 35, mit dem der Druck in einem Hohlraum 38 proportional zur Strom/Spannungshöhe verstellt werden kann.

Das Druckbegrenzungsventil 35 ist ein Proportional-Druckbegrenzungsventil, mit dem sich der Druck, bei dem das Druckbegrenzungsventil öffnet, stufenlos einstellen läßt.

Das über die Bohrung 13 zugeführte, unter Druck stehende Medium wirkt auf die ringförmige Stirnfläche 36 des Hohlkolbens 5 sowie auf die innerhalb des Hohlkolbens liegende Stirnfläche 37 des Ansatzes 14. Ist der auf den Hohlkolben 5 ausgeübte Druck größer als der von der Druckfeder 19 ausgeübte Gegendruck, wird der Hohlkolben 5 gegen die Kraft der Druckfeder 19 in Richtung auf das Einsatzteil 20 verschoben. Über die Drosselbohrung 16 gelangt das Medium auch in den Druckraum 38, der axial vom Hohlkolben 5 sowie vom Einsatzteil 20 begrenzt wird. Die Drosselbohrung 16 sorgt dafür, daß der Druck im Hohlraum 38 abhängig von der Kraft auf den Ventilkörper 24 eingestellt werden kann . Die Bohrung 23 im Einsatzteil 20 ist durch den Ventilkörper 24 verschlossen, so daß das Medium aus dem Druckraum 38 nicht durch die Bohrung 23 strömen kann. Kommt der Hohlkolben 5 mit seinem Ansatz 14 zur Anlage am Einsatzteil 20, sind die Radialbohrungen 8 geschlossen, so daß das Hydraulikmedium nicht zu einer quer zur Bohrung 13 liegenden Steuerbohrung 39 strömen kann. Die Flächenverhältnisse am Hohlkolben 5 in Verbindung mit der von der Druckfeder 19 ausgeübten Kraft sind so aufeinander abgestimmt, daß der Hohlkolben 5 eine Lage einnimmt, in der er eine Verbindung zwischen der Bohrung 13 und der Bohrung 39 herstellt. Das Hydraulikmedium strömt aus der axialen Bohrung 13 in den Hohlraum 18 des Hohlkolbens 5. Der Hohlkolben 5 nimmt, wie Fig. 1 zeigt, eine solche Lage ein, daß das Hydraulikmedium aus der Ringnut 11 über die Radialbohrungen 8 in die Ringnut 7 der Buchse 4 und von dort aus in die Steuerbohrung 39 strömen kann. Die Ringnut 7 ist über wenigstens eine Verbindung 40 mit einem Druckraum 41 verbunden, in dem sich der Ventilkörper 24 befindet und der im Einsatzteil 20 vorgesehen ist. Seine Wandung ist mit Durchtrittsöffnungen 42 versehen, die vorteilhaft gleichmäßig verteilt über den Umfang des Einsatzteiles 20 vorgesehen sind. Die Verbindung 40 ist im dargestellten Ausführungsbeispiel eine in der äußeren Mantelfläche der Hülse 4 vorgesehene, axial verlaufende Vertiefung. Sie kann aber auch durch eine Vertiefung in der Innenwand 9 des Einbauraumes 2 oder beispielsweise durch eine axiale Bohrung in der Buchse 4 und/oder im Gehäuse 1 gebildet sein.

Die Ringnut 11 des Hohlkolbens 5 ist im Querschnitt so abgestuft ausgebildet, daß sie radial außen ihren größten Querschnitt hat und über wenigstens eine Stufe in einen im Querschnitt kleineren Abschnitt übergeht.

Ist der Druck des Hydraulikmediums, das über die Bohrung 13 zugeführt wird, höher als der mit dem Druckbegrenzungsventil 35 eingestellte Druck, wird der Hohlkolben 5 so weit in Fig. 1 nach rechts verschoben, daß er mit seinem Ansatz 14 am Einsatzteil 20 anliegt. In dieser Stellung verschließt der Hohlkolben die Radialbohrungen 8 der Buchse 4, so daß das Hydraulikmedium nicht zur Bohrung 39 und damit auch nicht in die Zuleitung 40 gelangen kann. Über die Drosselbohrung 16, die zentrisch im Ansatz 14 des Hohlkolbens 5 vorgesehen ist und die gleichachsig zur Bohrung 23 im Einsatzteil 20 liegt, wirkt der zu hohe Druck des Hydraulikmediums auf den Ventilkörper 24. Sobald der Druck des Hydraulikmediums in der Bohrung 13 den über den Stößel 34 auf den Ventilkörper 24 ausgeübten Druck überschreitet, wird der Ventilkörper 24 gegen den vom Piezoantrieb 26 über den Stößel 25 ausgeübten Druck abgehoben, so daß das Hydraulikmedium über die Drosselbohrung 16, die Bohrung 23, den Druckraum 41 und die Zuleitung 40 in die Bohrung 39 abströmen kann. Dadurch wird ein Überdruck in der Bohrung 13 zuverlässig abgebaut. Sobald der Druck des Mediums in der Bohrung 13 wieder kleiner ist als der vom Stößel 25 auf den Ventilkörper 24 ausgeübte Gegendruck, wird der Ventilkörper 24 wieder in seine Schließstellung gedrückt, in der er die Bohrung 23 verschließt. Der Hohlkolben 5 wird dann wieder, unterstützt durch die Druckfeder 19, in seine Verbindungsstellung zurückgeschoben, in welcher er die Bohrung 13 in der beschriebenen Weise mit der Bohrung 39 verbindet. Somit kann die Größe der Verbindung zwischen den Bohrungen 13 und 39 proportional zum Druck im Hohlraum 38 und damit zur Strom/Spannungshöhe eingestellt werden.

Das Drosselventil 3 ist vorzugsweise ein Proportional-Drosselventil. Es wird bevorzugt für die Diesel-Hochdruckpumpen von Einspritzvorrichtungen in Kraftfahrzeugen eingesetzt. Für die Herstellung des Drosselventils 3 sowie auch des Druckbegrenzungsventils 35 sind nur geringe Kosten erforderlich. Der Piezoantrieb 26 des Druckbegrenzungsventils 35 verwendet den Piezoantrieb der Injektorventile der Einspritzvorrichtung. Durch den Einsatz des Piezoantriebes 26 wird die Zahl der Bauelemente verringert. Da der Piezoantrieb 26 nur geringe Baugröße hat, weist auch das Druckbegrenzungsventil 35 eine entsprechend geringe Baugröße auf. Die Piezoelemente des Piezoantriebes 26 haben eine sehr kurze Reaktionszeit, so daß sich eine hohe Stabilität des Druckbegrenzungsventils 26 ergibt. Die Ansteuerung des Piezoantriebes 26 ist analog oder digital möglich. Aufgrund der Verwendung des Piezoantriebes 26 beträgt die Hysterese 0, da der Stößel 25 nur durch die Piezoelemente einseitig eine Kraft erfährt. Da die Piezoelemente eine sehr kurze Reaktionszeit haben, zeichnet sich das Druckbegrenzungsventil 35 durch eine hohe Dynamik aus. Sowohl das Druckbegrenzungsventil 35 als auch das Drosselventil 3 können bevorzugt unmittelbar in das Gehäuse 1 der Pumpe eingesetzt werden. Da der Piezoantrieb 26 mittels der Mutter 29 in das Gehäuse 1 geschraubt wird, kann der Piezoantrieb 26 im Bedarfsfall einfach ausgetauscht werden. Zur Ansteuerung des Piezoantriebes 26 kann die Elektronik der Injektorsteuerung der Einspritzvorrichtung herangezogen werden. Auch kann die gleiche Spannung wie bei der Injektorsteuerung für den Betrieb des Piezoantriebes 26 verwendet werden. Das Druckbegrenzungsventil 35 hat infolge seiner kompakten Abmessungen und seiner geringen Zahl von Bauteilen in vorteilhafter Weise nur geringes Gewicht..

Das Drosselventil 3 in Verbindung mit dem nachgeschalteten Druckbegrenzungsventil 35 gewährleistet eine einwandfreie Funktion der gesamten Einrichtung.

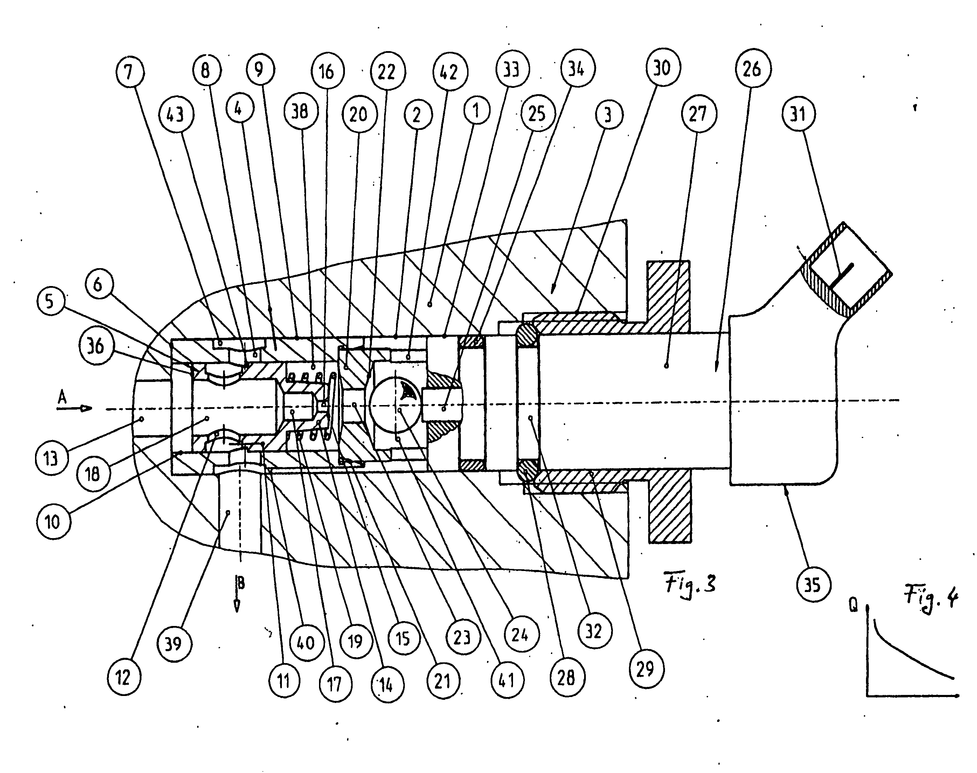

Die Ausführungsform gemäß Fig. 3 ist im wesentlichen gleich ausgebildet wie das Ausführungsbeispiel nach Fig. 1. Das Druckbegrenzungsventil 35 entspricht vollständig dem vorigen Ausführungsbeispiel. Das Drosselventil 3 ist im Unterschied zum vorigen Ausführungsbeispiel so ausgebildet, daß der Hohlkolben 5 die Steuerbohrung 39 dann verschließt, wenn der Piezoantrieb 26 des Druckbegrenzungsventils 35 bestromt wird. Sobald der Piezoantrieb 26 stromlos ist, wird der Hohlkolben 5 so verstellt, daß die Steuerbohrung 39 offen ist. Um diese Funktion zu gewährleisten, ist die Ringnut 11 im Hohlkolben 5 im Vergleich zur vorigen Ausführungsform um 180° verdreht vorgesehen. Die Steuerkante 43 ist bei der Ausführungsform nach Fig. 3 in Richtung auf das Druckbegrenzungsventil 35 gerichtet, während sie beim vorigen Ausführungsbeispiel in Richtung auf die Bohrung 13 gerichtet ist. Die Ringnut 11 des Hohlkolbens 5 liegt im wesentlichen links von den Radialbohrungen 8 der Buchse 4, während sie bei der Ausführungsform gemäß Fig. 1 im wesentlichen links der Radialbohrungen 8 vorgesehen ist.

Im übrigen ist das Drosselventil 3 gleich ausgebildet wie bei der vorigen Ausführungsform.

Infolge der beschriebenen Ausbildung kann mit der Pumpe weitergearbeitet werden, wenn zum Beispiel ein Stromausfall eintritt und dementsprechend der Piezoantrieb 26 des Druckbegrenzungsventils 35 stromlos ist. In diesem Falle wird im Unterschied zur vorigen Ausführungsform der Hohlkolben 5 nicht in seine Schließstellung verschoben, in der er die Bohrung 13 von der Steuerbohrung 39 trennt, sondern nimmt die in Fig. 3 beispielhaft dargestellte Verbindungsstellung ein. Bei stromlosem Piezoantrieb 26 wird dadurch das Hydraulikmedium von der Bohrung 13 über die Radialbohrungen 8, 12 der Buchse 4 und des Hohlkolbens 5 in die Steuerbohrung 39 gelangen.

Fig .4 zeigt das Durchfluß-Strom-Diagramm des Drosselventils 3 gemäß Fig. 3 Die Ringnut 11 des Hohlkolbens 5 ist so ausgebildet, daß sie in der Außenwand des Hohlkolbens 5 ihren größten Querschnitt hat. Dieser Querschnitt nimmt radial nach innen stufenweise ab. Im Unterschied zur Ausführungsform gemäß Fig. 1 ist der vergrößerte Querschnittsbereich der Ringnut 11 so vorgesehen, daß er in Richtung auf das Druckbegrenzungsventil 35 axial über den kleineren Querschnittsbereich übersteht. Dadurch ist gewährleistet, daß bei einem Stromausfall, d.h. bei nicht betätigtem Piezoantrieb 26, die Pumpe weiter betrieben werden kann.

Bei beiden beschriebenen Ausführungsbeispielen kann der Ventilkörper 24 mit einem (nicht dargestellten) Stift im Einsatzteil 20 gehalten und geführt sein. Dieser Stift kann den Ventilkörper durchsetzen. Der Ventilkörper 24 ist hierzu mit einer länglichen Öffnung versehen, so daß er die zum Schließen und Öffnen der Bohrung 23 notwendigen Bewegungen ausführen kann.

## Patentansprüche

1. Drosselventil (3), das eine Vorstufe hat, die ein Druckbegrenzungsventil (35) umfaßt, insbesondere für Diesel-Hochdruckpumpen von Einspritzvorrichtungen in Kraftfahrzeugen, mit mindestens einem Kolben (5), der durch ein unter Druck stehendes Medium gegen eine Gegenkraft (19) verschiebbar ist, und mit einem Einsatzteil (20), das einen Ventilsitz (22) an einer Bohrung (23) aufweist, an dem ein Ventilkörper (24) anliegt, der in einer Schließlage am Ventilsitz (22) durch einen Stößel (25) gehalten ist, der mit mindestens einem Piezoelement eines Piezoantriebes (26) verbunden ist,
**dadurch gekennzeichnet, daß** der Kolben (5) wenigstens eine Drosselstelle (16) aufweist, die dem Ventilsitz (22) im Einsatzteil (20) vorgelagert ist und in einen Druckraum (38) mündet, der zwischen dem Kolben (5) und dem Einsatzteil (20) liegt.

2. Drosselventil nach Anspruch 1,
**dadurch gekennzeichnet, daß** der Kolben (5) als Hohlkolben ausgebildet ist.

3. Drosselventil nach Anspruch 1 oder 2,
**dadurch gekennzeichnet, daß** der Kolben (5) in einer Buchse (4) verschiebbar geführt ist, die vorteilhaft wenigstens eine Ringnut (7) aufweist, in die mindestens eine Steuerbohrung (39) mündet.

4. Drosselventil nach einem der Ansprüche 1 bis 3,
**dadurch gekennzeichnet, daß** der Kolben (5) in seiner Mantelfläche wenigstens eine Ringnut (11) aufweist.

5. Drosselventil nach Anspruch 4,
**dadurch gekennzeichnet, daß** die Ringnut (11) des Kolbens (5) in Richtung auf das Einströmende des Kolbens einen erweiterten Querschnitt hat.

6. Drosselventil nach Anspruch 4,
**dadurch gekennzeichnet, daß** die Ringnut (11) des Kolbens (5) in Richtung auf das Druckbegrenzungsventil (35) erweiterten Querschnitt hat.

7. Drosselventil nach einem der Ansprüche 3 bis 6,
**dadurch gekennzeichnet, daß** in die Ringnut (7) der Buchse (4) radial sie durchsetzende Bohrungen (8) münden.

8. Drosselventil nach einem der Ansprüche 4 bis 7,
**dadurch gekennzeichnet, daß** in die Ringnut (11) des Kolbens (5) radial ihn durchsetzende Bohrungen (12) münden.

9. Drosselventil nach einem der Ansprüche 1 bis 8,
**dadurch gekennzeichnet, daß** der Kolben (5) an seinem dem Druckbegrenzungsventil (35) zugewandten Ende die vorteilhaft durch eine Bohrung in einem axialen Ansatz (14) des Kolbens (5) gebildete Drosselstelle (16) aufweist.

10. Drosselventil nach einem der Ansprüche 1 bis 9,
**dadurch gekennzeichnet, daß** das Drosselventil (3) in ein Gehäuse (1) der Pumpe eingesetzt ist.

11. Drosselventil nach einem der Ansprüche 1 bis 10,
**dadurch gekennzeichnet, daß** das Einsatzteil (20) in die Buchse (4) eingesetzt ist.

12. Drosselventil nach Anspruch 11,
**dadurch gekennzeichnet, daß** der Aufnahmeraum (41) des Einsatzteiles (20) für den Ventilkörper (24) mit der Steuerbohrung (39) verbunden ist, und daß vorteilhaft die Buchse (4) und/oder die Wandung (10) des Einbauraumes (2) des Pumpengehäuses (1) mindestens einen Strömungskanal (40) für das Medium aufweist, der den Aufnahmeraum (41) des Einsatzteiles (20) mit der Steuerbohrung (39) verbindet.

13. Drosselventil nach einem der Ansprüche 1 bis 12,
**dadurch gekennzeichnet, daß** der Piezoantrieb (26) des Druckbegrenzungsventiles (35) in den Einbauraum (2) des Pumpengehäuses (1) mit einem Schraubelement (29) einschraubbar ist, das vorteilhaft eine Mutter ist, in die der Piezoantrieb (26) eingesetzt ist.

14. Drosselventil nach einem der Ansprüche 1 bis 13,
**dadurch gekennzeichnet, daß** der Piezoantrieb (26) durch eine Injektorsteuerung ansteuerbar ist, mit der Einspritzventile der Einspritzvorrichtung ansteuerbar sind.

15. Drosselventil nach einem der Ansprüche 1 bis 14,
**dadurch gekennzeichnet, daß** das Drosselventil (3) ein Proportional-Drosselventil ist.

16. Drosselventil nach einem der Ansprüche 1 bis 15,
**dadurch gekennzeichnet, daß** das Druckbegrenzungsventil (35) ein Proportional-Druckbegrenzungsventil ist.

## Claims

1. Throttle valve (3) comprising a preliminary stage including an excess pressure valve (35) particularly for Diesel high pressure pumps of fuel injection devices in vehicles with at least one piston (5), which is displacable by a pressurized medium counter to a counterforce (19) and with an inserted piece (20) comprising at a bore (23) a valve seat (22), at which is adjacent a valve body (24), which in a closing position is held at the valve seat (22) by a pestle (25) which is linked with at least one piezo element of a piezo drive (26),
**characterised in that** the piston (5) comprises at least one restriction (16) which precedes the valve seat (22) within the inserted piece (20) and leads to a press room (38) which is situated between the piston (5) and the inserted piece (20).

2. Throttle valve according to claim 1,
**characterised in that** the piston (5) is formed as a trunk piston.

3. Throttle valve according to claim 1 or 2,
**characterised in that** the piston (5) is guided displacably within a jack (4), which advantageously comprises at least one ring groove (7), into which leads at least one control bore (39).

4. Throttle valve according to one of claims 1 to 3,
**characterised in that** the piston (5) comprises within its generated surface at least one ring groove (11).

5. Throttle valve according to claim 4,
**characterised in that** the ring groove (11) of the piston (5) has a widened cross section in the direction of the influx end of the piston.

6. Throttle valve according to claim 4,
**characterised in that** the ring groove (11) of the piston (5) has a widened cross section in the direction of the excess pressure valve (35).

7. Throttle valve according to one of claims 3 to 6,
**characterised in that** into the ring groove (7) of the jack (4) there are leading bores (8), radially penetrating it.

8. Throttle valve according to one of claims 4 to 7,
**characterised in that** into the ring groove (11) of the piston (5) there are leading bores (12), radially penetrating it.

9. Throttle valve according to one of claims 1 to 8,
**characterised in that** the piston (5) comprises at its end directed towards the excess pressure valve (35) the restriction (16), advantageously formed by a bore within a radial appendix of the piston (5).

10. Throttle valve according to one of claims 1 to 9,
**characterised in that** the throttle valve (3) is inserted into a housing (1) of the pump.

11. Throttle valve according to one of claims 1 to 10,
**characterised in that** the inserted piece (20) is installed within the jack (4).

12. Throttle valve according to claim 11,
**characterised in that** the reception space (41) of the inserted piece (20) for the valve body (24) is connected with the control bore (39) and that advantageously the jack (4) and/or the wall (10) of the installation space (2) of the pump housing (1) comprises at least one flow channel (40) for the medium, connecting the reception space (41) of the inserted piece (20) with the control bore (39).

13. Throttle valve according to one of claims 1 to 12,
**characterised in that** the piezo drive (26) of the excess pressure valve (35) can be screwed into the installation space (2) of the pump housing (1) with a screw element (29) advantageously being a nut, into which the piezo drive (26) is inserted.

14. Throttle valve according to one of claims 1 to 13,
**characterised in that** the piezo drive (26) can be controlled by an injector control, with which injector valves of the injection device can be activated.

15. Throttle valve according to one of claims 1 to 14,
**characterised in that** the throttle valve (3) is a proportional throttle valve.

16. Throttle valve according to one of the claims 1 to 15,
**characterised in that** the excess pressure valve (35) is a proportional excess pressure valve.

## Revendications

1. Soupape d'étranglement (3) comportant une pièce préliminaire comprenant une soupape de limitation de pression (35), particulièrement pour pompes haute pression Diesel de systèmes d'injection dans des véhicules automobiles avec au moins un piston (5), lequel peut être déplacé par un médium sous pression contre une force antagoniste (19) et avec une pièce d'insert (20) comprenant un siège de soupape (22) à un perçage (23) auquel est ajusté un corps de soupape (24), lequel est arrêté dans une position de fermeture dans le siège de soupape (22) par un poussoir (25), lequel est relié au moins à un élément piezo d'un entraïnement piézo (26),
**caractérisée en ce que** le piston (5) comprend au moins un endroit d'étranglement (16), situé avant le siège de soupape (22) dans la pièce d'insert (20) et débouchant dans une chambre de pression (38), placée entre le piston (5) et la pièce d'insert (20).

2. Soupape d'étranglement selon revendication 1,
**caractérisée en ce que** le piston (5) est constitué sous la forme d'un piston creux.

3. Soupape d'étranglement selon revendication 1 ou 2,
**caractérisée en ce que** le piston (5) est guidé coulissant dans une douille (4) comprenant avantageusement au moins une rainure annulaire (7) dans laquelle débouche au minimum un perçage de commande (39).

4. Soupape d'étranglement selon une des revendications 1 à 3,
**caractérisée en ce que** le piston (5) comprend dans sa nappe de corps au moins une rainure annulaire (11).

5. Soupape d'étranglement selon revendication 4,
**caractérisée en ce que** la rainure annulaire (11).du piston (5) présente en direction de l'extrémité d'admission du piston une coupe transversale élargie.

6. Soupape d'étranglement selon revendications 4,
**caractérisée en ce que** la rainure annulaire (11) du piston (5) comprend en direction de la soupape de limitation de pression (35) une coupe transversale élargie.

7. Soupape d'étranglement selon une des revendications 3 à 6,
**caractérisée en ce que** dans la rainure annulaire (7) de la douille (4) débouchent des perçages (8) pénétrant celle-ci radialement.

8. Soupape d'étranglement selon une des revendications 4 à 7,
**caractérisée en ce que** dans la rainure annulaire (11) du piston (5) débouchent des perçages (12) pénétrant celui-ci radialement.

9. Soupape d'étranglement selon une des revendications 1 à 8,
**caractérisée en ce que** le piston (5) comprend l'orifice d'étranglement (16) avantageusement formé par un perçage dans un appendice axial (14) du piston (5) à son extrémité tournée vers la soupape de limitation de pression (35).

10. Soupape d'étranglement selon une des revendications 1 à 9,
**caractérisée en ce que** la soupape d'étranglement (3) est posée dans un boîtier (1) de la pompe.

11. Soupape d'étranglement selon une des revendications 1 à 10,
**caractérisée en ce que** la pièce d'insert (20) est posée dans la douille (4).

12. Soupape d'étranglement selon une des revendications 11,
**caractérisée en ce que** l'espace de réception (41) de la pièce d'insert (20) pour le corps de soupape (24) est relié avec le perçage de commande (39) et qu'avantageusement la douille (4) et/ou la paroi (10) d'espace de réception (2) du boîtier (1) de la pompe comprend au moins un conduit fluidique (40) pour le médium connectant l'espace de réception (41) de la pièce d'insert (20) avec le perçage de commande (39).

13. Soupape d'étranglement selon une des revendications 1 à 12,
**caractérisée en ce que** l'entraînement piezo (26) de la soupape de limitation de pression (35) peut être vissé dans l'espace d'emplacement (2) du boîtier (1) de la pompe par un élément de vissage (29) étant avantageusement un écrou dans lequel l'entraînement piezo (26) est emmanché.

14. Soupape d'étranglement selon une des revendications 1 à 13,
**caractérisée en ce que** l'entraînement piezo (26) peut être amorcé par une commande d'injection par laquelle des soupapes d'injection peuvent être amorcées.

15. Soupape d'étranglement selon une des revendications 1 à 14,
**caractérisée en ce que** la soupape d'étranglement (3) est une soupape d'étranglement proportionnelle.

16. Soupape d'étranglement selon une des revendications 1 à 15,
**caractérisée en ce que** la soupape de limitation de pression (35) est une soupape de limitation de pression proportionnelle.
